# EUROPEAN PATENT APPLICATION

(11) **EP 2 811 240 A1**
(43) Date of publication of application: **10.12.2014**
(21) Application number: 14382195.7
(22) Date of filing: 28.05.2014
(51) Int. Cl.: F24J 2/52

(54) **Solar panel with support system**

(30) Priority: 29.05.2013 ES 201330785
(71) Applicant: Lasierra Toldra, Antoni, 08401 Granollers (Barcelona) (ES); Retana Pendon, Alberto Miguel, 08401 Granollers (Barcelona) (ES)
(72) Inventor: Retana Pendon, Alberto Miguel, 08401 GRANOLLERS (BARCELONA) (ES)
(74) Representative: Durán-Corretjer, S.L.P.

(57) **Abstract**

Solar panel with support system which comprises at least one support element (2, 2', 3, 3') joined to the frame (1) of the solar panel.

## Description

The present invention relates to solar panels for supply of heat or electricity from sunlight, referred to hereinafter as "solar panels".

Solar panels are usually manufactured as an insulated unit which is secured in the place where it is going to be installed by means of rigid securing or support systems. When the panels are parallel to the surface on which they will be installed, the most common securing system is by means of tie screws or small supports which are anchored directly on the aforementioned surface. On the other hand, when the panels are installed with an angle other than zero relative to the surface on which they will be installed, the most common system is a support assembly formed by an assembly of profiles which are joined to one another by screws. In turn, these assemblies are secured on the base surface by means of tie screws and other heavy objects, and they are secured on the collector by means of rigid fastenings, such as screws for example. The systems are not standardised, and their installation time is intensive. In addition, it is sometimes a problem to obtain suitable elements for installation of the panels without damaging their structure.

Document US 2405877 discloses a panel of this type, with tie screws/supports which are anchored on the exterior of a panel with a generally parallelepiped form.

The present invention discloses a solar panel with a system for supporting a solar panel, with at least one support element which is joined to the outer frame of the solar panel.

More particularly, in order to solve the aforementioned problems, the present invention discloses a solar panel with a support system, the support system comprising at least one support element which is joined to the outer frame of the solar panel, characterised in that the support element is joined to a hinge element or ball joint which forms part of the structure of the panel, said element which forms part of the structure of the panel constituting a profile of the frame of the solar panel, with an outer form which defines one of the two elements which form said joint, said profile being constituted by, or comprised by, the frame of the panel.

According to an advantageous embodiment, said profile defines a groove in the frame of the panel which gives access to a cylindrical housing in which there is situated a cylinder for articulately joining the support element.

Preferably, the support system comprises two elongate elements which are joined to the rear part of the panel, parallel to one another, and are situated on a first side of the sides of the panel parallel to the surface, and another two elongate elements, parallel to one another, which are joined to the parallel side opposite said first side, such that each elongate element which is joined to the first side is adjacent to one of the elongate elements of the opposite side.

According to a preferred embodiment, said adjacent elongate elements have a plurality of orifices which are designed to receive a joining part (for example a pin, a screw, etc.), which is common to both of them, and fixes the position of said adjacent elements relative to one another.

In preferred embodiments, the support element is joined to the panel by means of one or more hinges or ball joints which are secured on the outer surface of the panel.

In an alternative embodiment, the support element is joined to an element which forms part of the structure of the panel.

Preferably, the frame of the panel comprises a profile with an outer form which defines one of the two elements which form said joint.

Also preferably, the elongate elements are support profiles.

Preferably, said elongate elements are joined by means of a pin to one of said joints.

Also preferably, the system is characterised in that the pin is covered totally or partially by a polymer or ceramic material.

The present invention discloses an articulated securing system. Part of the assembly or the entire assembly of support and securing profiles is/are joined to the collector. By this means, the present invention makes use of the structural strength of the collector, in order to lighten part of the support structure, and thus prevent the duplication of structural elements. Also, the time for mounting the securing/support structure is reduced very significantly, since in fact said structure is already mounted on the collector itself.

The joint system can be produced in different ways, including, purely by way of example, by means of hinges or ball joints which are joined to the panel or solar collector. One option is to secure one of the two parts which form the hinge or ball joint on the collector, and to secure the other part to the support/securing profile, both joins being able to be produced by any rigid securing means of a known type, i.e. welding, adhesion, riveting, screwing, pressing, etc.

Another preferred option according to the present invention consists of making use of the profile of the frame of the solar panel such that it is one of the two parts of the hinge or ball joint, and the other part of the hinge or ball joint is secured to the support/securing profile by means of said rigid securing means. By this means, the joint system is reduced by one component, and in turn the reliability of mounting of the assembly is increased.

In the case of panels parallel to the surface, such as on roofs for example, the panels will be used with the joints, without needing elongate elements.

In order to facilitate further still the mounting by the installer, the present invention comprises a system for securing the free part of the hinge or ball joint to the securing or support system by means of a through shaft with pins at one or both ends, such that the complete assembly can be mounted without needing any tools. A preferred structure of the through shaft is provided with a total or partial polymer or ceramic covering, in order to prevent intermetallic corrosion, in view of its exposure to bad weather when in use.

According to the present invention, instead of using a pin, the hinge can be secured by means of rivets to the elongate elements or support tubes of the securing system.

Account must be taken of the fact that the joints or hinges can be installed directly on exterior structural elements, such as roofs for example, without having the elongate elements secured thereto.

An objective of the present invention is to achieve a substantial reduction in the components of the panel/securing assembly, an increase in the mechanical reliability of the assembly, and a substantial reduction in the time taken for the installer to mount the securing/support system.

For better understanding, and by way of explanatory but non-limiting example, drawings are appended of an embodiment of the solar panel with a support/securing system for the solar panel.

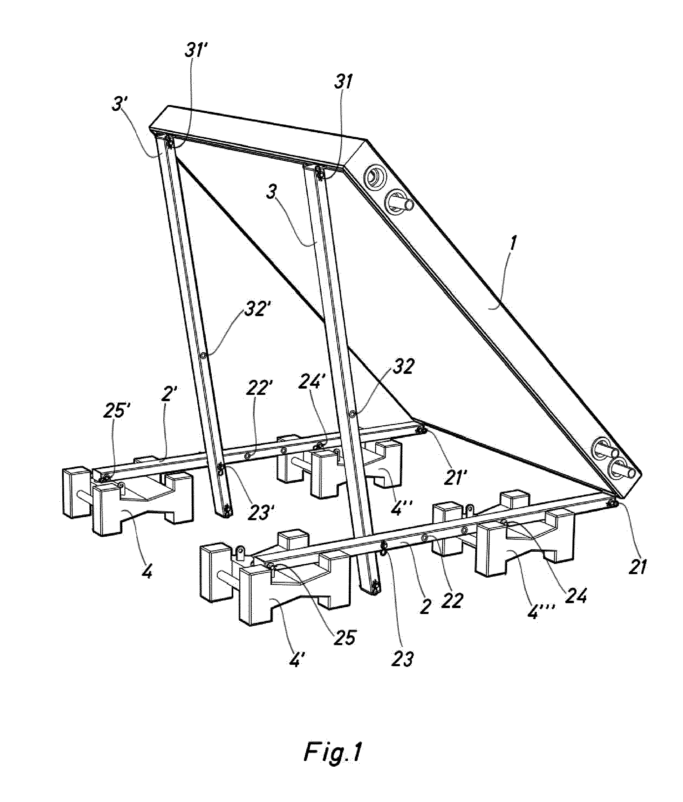

Fig. 1 shows a view in perspective of a panel according to the present invention.
Fig. 2 shows a detail of one of the upper corners of the panel in Fig. 1.
Fig. 3 shows a transverse cross-section of said upper corner with the support profile in the dismantled situation.
Fig. 4 corresponds to Fig. 3, with the support profile mounted.
Fig. 5 shows a detail in perspective of a lower corner of the panel in Fig. 1.
Fig. 6 shows a detail in perspective of the placing of the lower support profile in a mobile support.
Fig. 7 shows a view in perspective of a detail of the join between an upper support profile and a lower support profile joined by a common pin.

The figures show an embodiment of the present invention, comprising a solar panel with a frame or casing 1 which delimits its perimeter, and has, to secure it to the ground in the inclined position, four support elements 2, 2', and 3, 3', joined to said frame 1. The frame or casing 1 shown has a generally parallelepiped form.

In the example shown, the support elements 2, 2', and 3, 3' are four support profiles with a rectangular cross-section, two being located on the upper short side and consisting of two profiles 3, 3' which are parallel with one another, and intersect another two support profiles 2, 2' situated on the opposite parallel, lower short side of the panel. The support profiles are adjacent in pairs, i.e. 2 with 3 and 2' with 3'. Each of the profiles 2, 2', and 3, 3' has a plurality of transverse orifices 22, 23, 24, 25, 32, 22', 23', 24', 25', 32' which are used in order to fix the position of the profiles relative to one another and relative to other elements. In the in the example shown, the lower profiles 2, 2' are situated approximately horizontally, and the upper profiles 3, 3' are situated in an inclined position.

Each pair of adjacent upper profiles is joined by a pin, or any other securing system, which occupies one of the aforementioned transverse orifices in each of the support profiles.

Also, each of the lower profiles 2, 2' is supported in mobile supports 4, 4', 4", 4"' which have lugs with orifices for securing of the lower support profiles 2, 2'.

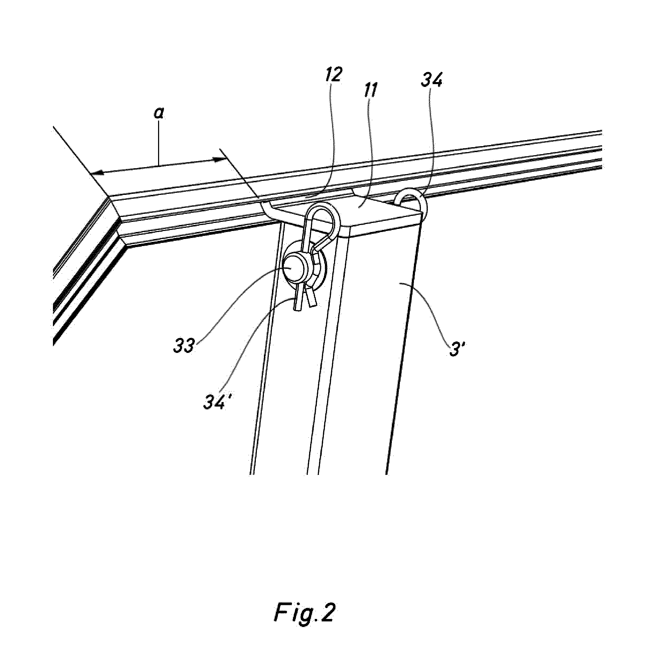

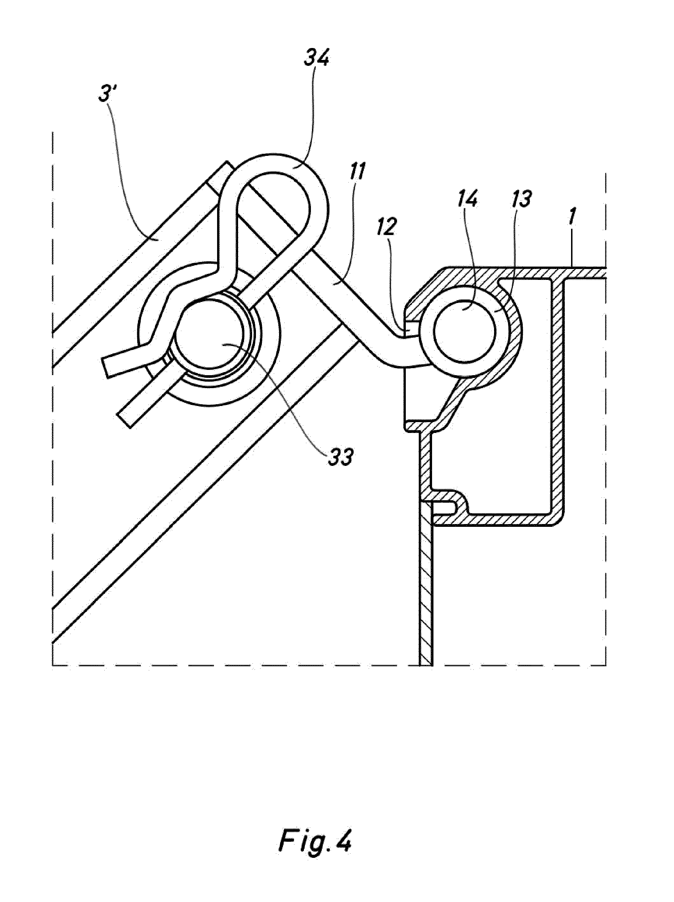

Fig. 2 to 5 show in detail the articulated joint system of the support profiles of the example shown.

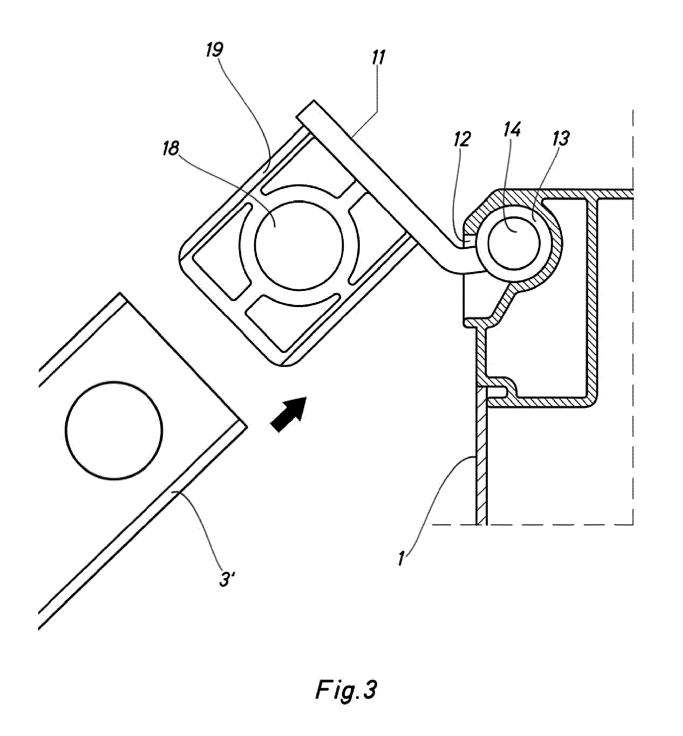

As can be seen in Fig. 3, the frame 1 of the solar panel has an opening or groove 12 which provides access from the exterior to a cylindrical housing 14 which is situated inside the panel, in order to receive hinge elements, in this case a cylinder 13 of a hinge part 11. At the free end of the hinge part there is a structure 19 with a transverse orifice 18 which can receive the support profile 3'. As shown in Fig. 2, the hinge part 11 and the profile 3 are joined by means of a pin 33, or any other securing system, which passes through the transverse orifice 18. The pin 33 is locked by means of a safety wire 34.

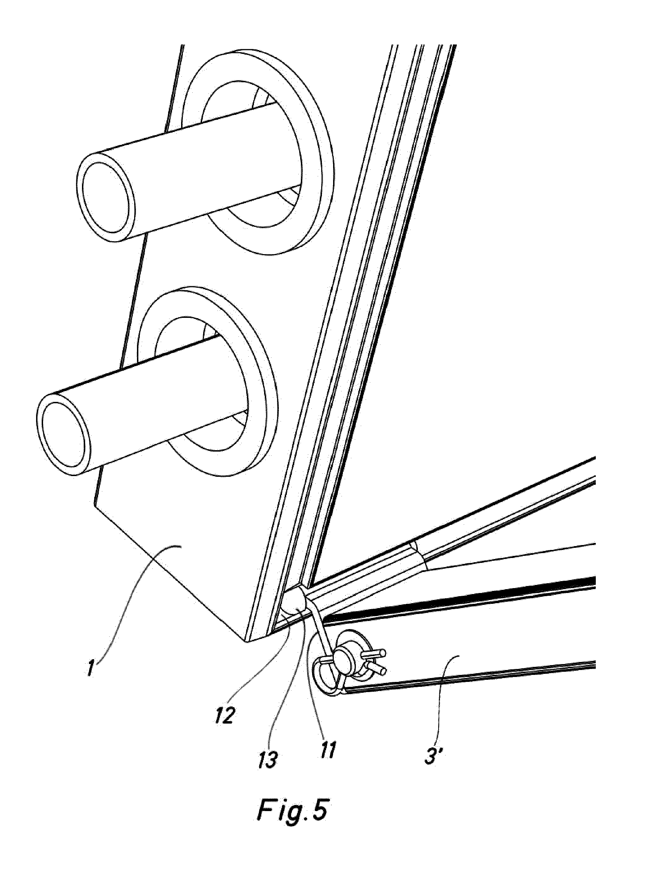

As can be seen in Fig. 5, the system used in the example for the lower profile 3' is identical.

Fig. 2 also shows how the upper profile 3' is separated by a distance a from the end of the panel. This distance is occupied by the adjacent parallel support profile 2' (this profile cannot be seen in Fig. 2 since it is in the lower part).

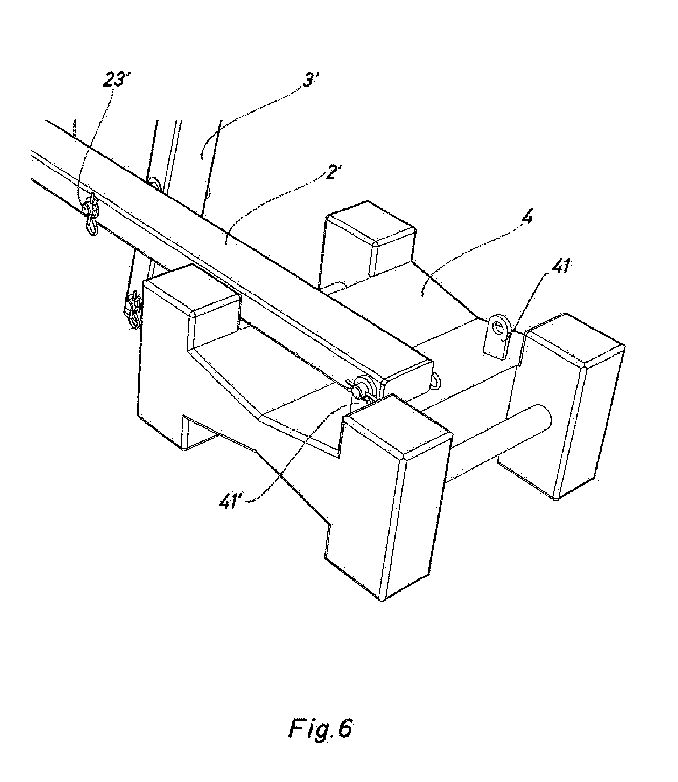

Fig. 6 shows the detail of the connection of the lower profile 2' to one of the mobile supports 4. For this purpose, the support has parallel lugs 41, 41', and a pin system similar to the one previously described is used, using the existence of transverse orifices in the support profiles.

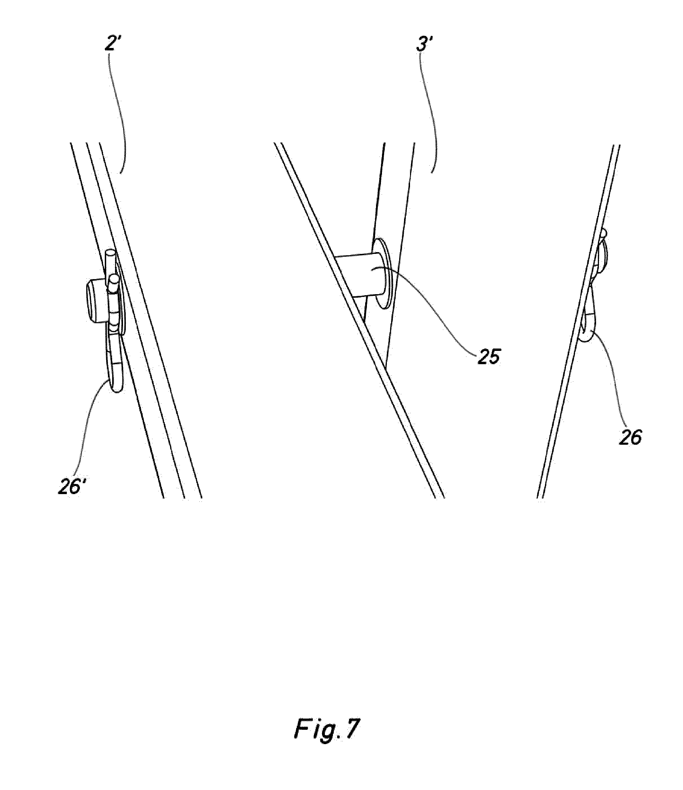

Fig. 7 shows a detail of the join between two adjacent support profiles 2', 3'. It is formed by means of a pin 25 which passes through corresponding transverse orifices in the support profiles 2', 3'. The pin 25 is secured by means of wires 26, 26'.

Numerous variants of the example described exist. By way of example, the hinges in the example can be replaced by ball joint pistons. It is also possible to secure a hinge (for example by means of welding, riveting or screwing) on the outer surface of the panel, instead of using the surface of the panel itself as one of the parts of the hinge. It is also possible for the hinge part 11 and the profiles 2, 2', 3, 3' to form a single part, which is joined for example by means of welding, riveting or screwing.

It is also possible to change the arrangement of the transverse orifices in the profiles shown in the figures, and to change the form of the supports 4, 4', 4", 4"', or even. depending on the cases, to dispense with them altogether.

Although the invention has been described with reference to preferred embodiments, these must not be considered as limiting the invention, which will be defined by the widest interpretation of the following claims.

## Claims

1. Solar panel with a support system, the support system comprising at least one support element which is joined to the outer frame of the solar panel, **characterised in that** the support element is joined to a hinge element or ball joint which forms part of the structure of the panel, said element which forms part of the structure of the panel constituting a profile of the frame of the solar panel, with an outer form which defines one of the two elements which form said joint, said profile being comprised by the frame of the panel.

2. Panel according to claim 1, **characterised in that** said profile defines a groove in the frame of the panel which gives access to a cylindrical housing in which there is situated a cylinder for joining the support element.

3. Panel according to either claim 1 or 2, **characterised in that** the support system comprises two elongate elements which are joined to the rear part of the panel, parallel to one another, and are situated on a first side of the sides of the panel, and another two elongate elements, which are joined to the parallel side opposite said first side, such that each elongate element which is joined to the first side is adjacent to one of the elongate elements of the opposite side.

4. Panel according to claim 3, **characterised in that** said adjacent elongate elements have a plurality of orifices which are designed to receive a joining element which is common to both of them, and fixes the position of said adjacent elements relative to one another.

5. Panel according to claim 4, **characterised in that** said joining element is a pin.

6. Panel according to any one of claims 2 to 5, **characterised in that** the elongate elements are support profiles.

7. Panel according to claim 6, **characterised in that** each of said elongate elements is joined by means of a pin to one of said joints.

8. Panel according to either claim 4 or 7, **characterised in that** the pin is covered totally or partially by a polymer or ceramic material.
